(19) Europäisches Patentamt / European Patent Office / Office européen des brevets

(11) **EP 3 079 415 B1**

(12) **EUROPEAN PATENT SPECIFICATION**

(45) Date of publication and mention
of the grant of the patent:
**16.05.2018 Bulletin 2018/20**

(51) Int Cl.:
*H04W 52/34* *(2009.01)*        *H04W 52/14* *(2009.01)*
*H04W 52/52* *(2009.01)*        *H04B 7/08* *(2006.01)*

(21) Application number: **13900590.4**

(22) Date of filing: **31.12.2013**

(86) International application number:
**PCT/CN2013/091062**

(87) International publication number:
**WO 2015/100596 (09.07.2015 Gazette 2015/27)**

(54) **METHOD, DEVICE AND SYSTEM FOR SUPPRESSING UPLINK BACKGROUND NOISE IN INDOOR DISTRIBUTED SYSTEM**

VERFAHREN, VORRICHTUNG UND SYSTEM ZUR UNTERDRÜCKUNG VON UPLINK-HINTERGRUNDRAUSCHEN IN VERTEILTEM INNENRAUMSYSTEM

PROCÉDÉ, DISPOSITIF ET SYSTÈME POUR SUPPRIMER DU BRUIT DE FOND DE LIAISON MONTANTE DANS UN SYSTÈME RÉPARTI D'INTÉRIEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.10.2016 Bulletin 2016/41**

(73) Proprietor: **Huawei Technologies Co., Ltd.**
**Longgang District**
**Shenzhen, Guangdong 518129 (CN)**

(72) Inventors:
• **HE, Jun**
**Shenzhen**
**Guangdong 518129 (CN)**
• **GONG, Lanping**
**Shenzhen**
**Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**EP-A1- 1 638 224        CN-A- 101 335 530**
**CN-A- 102 170 690        CN-A- 102 231 906**
**US-A- 3 641 437          US-A1- 2004 106 387**
**US-A1- 2008 198 955**

**Description**

**TECHNICAL FIELD**

Embodiments of the present invention relate to mobile communications technologies, and in particular, to a method for suppressing uplink background noise in an indoor distributed system, a device, and a system.

**BACKGROUND**

A Universal Mobile Telecommunications System (Universal Mobile Telecommunications System, UMTS for short) indoor distributed system is mainly applied to scenarios such as a subway, a shopping mall, a gymnasium, and an airport. To increase a coverage radius of a cell (cell) in an indoor distributed system, reduce handover between cells, and improve carrier utilization, a co-cell (co-cell) solution is usually used when the indoor distributed system is planned. The so-called co-cell is a cell jointly covered by multiple remote radio units (remote radio unit, RRU) that share a same signal source. In a scenario in which multiple remote radio units cover one co-cell, multiple remote radio units controlled by a same building baseband unit (Base Band Unit, BBU) are physically distributed at different sites, but are logically in a same cell, and therefore, cell parameters of the remote radio units, such as a quantity of carriers, a frequency, and channel configuration, are the same.

When the co-cell solution is used, a digital combination solution or an analog combination solution may be used in an uplink receiving direction, so as to superimpose carriers in the co-cell. In the prior art, regardless of which one of the digital combination solution and the analog combination solution is used, either of the following manners may be used to perform combination.

In a first combination manner, remote radio units perform combination separately. The remote radio units are cascaded. Cascading of three levels of remote radio units is used as an example for description: The co-cell is formed by a first-level remote radio unit, a second-level remote radio unit, and a third-level remote radio unit connected in sequence. After receiving data sent by a user terminal, the first-level remote radio unit sends the data to the second-level remote radio unit; the second-level remote radio unit combines data sent by a user terminal that accesses the second-level remote radio unit and the data sent by the first-level remote radio unit, and sends the combined data to the third-level remote radio unit; the third-level remote radio unit combines data sent by a user terminal that accesses the third-level remote radio unit and the data sent by the second-level remote radio unit, and sends the combined data to a base station. Optionally, the third-level remote radio unit may send the combined data to a signal source access unit, and then the signal source access unit sends the data to the base station.

In a second combination manner, remote radio units do not perform combination; instead, a base station or a signal source access unit performs combination. Still, cascading of three levels of remote radio units is used as an example for description. After receiving data sent by a user terminal, a first-level remote radio unit sends the data to a second-level remote radio unit; the second-level remote radio unit separately sends, to a third-level remote radio unit, data sent by a user terminal that accesses the second-level remote radio unit and the data sent by the first-level remote radio unit; the third-level remote radio unit separately sends, to the base station, data sent by a user terminal that accesses the third-level remote radio unit and the two channels of data sent by the second-level remote radio unit, and the base station combines the three channels of data received by the base station. Optionally, the third-level remote radio unit may also separately send, to the signal source access unit, the data sent by the user terminal that accesses the third-level remote radio unit and the two channels of data sent by the second-level remote radio unit, and the signal source access unit combines the three channels of data received by the signal source access unit, and sends the combined data to the base station.

Regardless of combination is performed in which one of the foregoing manners, directly adding up carriers of the co-cell during combination causes an increase in uplink background noise, where the uplink background noise refers to background noise in an uplink signal. Especially, when there is a relatively large quantity of levels of remote radio units in a co-cell, uplink background noise after combination increases greatly, which severely reduces a signal-to-noise ratio (Signal-to-Noise Ratio, SNR) of an uplink signal, and reduces a success rate of accessing a UMTS by a user terminal. Especially, when only a remote radio unit at one level is accessed by a user terminal, and other remote radio units are not accessed by a user terminal, after final combination, uplink background noise of the remote radio units increases greatly, which is very likely to cause the user terminal that accesses the remote radio unit at this level to fail to access the UMTS.

US 2008/0198995 A1 discloses methods and systems for distributed antenna systems. Signal activity from a given terminal on a particular branch can be identified and that information can be used to selectively block or filter the signal noise contributed by the other branches to an aggregation point. The selective blocking or filtering can also include an attenuation function to attenuate the signal and provide dynamic range smoothing.

US 2004/0106387 A1 discloses a method for signal gain adjustment in a multi-port, digital distributed antenna system, which uses a sorter to sort received signals in ascending order according to their signal levels. A threshold comparator generates a dynamic range fair threshold that is updated as any remaining system dynamic range is distributed amongst the remaining signals. Any received signal that is less than or equal to the threshold is attenuated with a unity gain factor. A signal that is greater than the threshold is attenuated with a gain factor that is inversely proportional to the signal level.

## SUMMARY

The present invention is as defined in the appended independent claims. Embodiments of the present invention provide a method for suppressing uplink background noise in an indoor distributed system, a device, and a system, to reduce uplink background noise after combination.

According to a first aspect, an embodiment of the present invention provides a method for suppressing uplink background noise in an indoor distributed system, including:

acquiring, by a gain adjustment device, carrier-level uplink user power of a remote coverage unit in a co-cell and carrier-level uplink user power of the rest of remote coverage units in the co-cell;

determining, by the gain adjustment device, a carrier-level weighting factor of the remote coverage unit according to the carrier-level uplink user power of the remote coverage unit and the carrier-level uplink user power of the rest of remote coverage units in the co-cell; and

adjusting, by the gain adjustment device, a carrier-level uplink receive gain of the remote coverage unit according to the carrier-level weighting factor of the remote coverage unit, where the carrier-level uplink receive gain of the remote coverage unit is less than 0.

According to a second aspect, an embodiment of the present invention provides a method for suppressing uplink background noise in an indoor distributed system, including:

reporting, by a remote coverage unit in a co-cell, carrier-level uplink user power of the remote coverage unit to a gain adjustment device, so that the gain adjustment device determines a carrier-level weighting factor of the remote coverage unit according to the carrier-level uplink user power of the remote coverage unit and carrier-level uplink user power of the rest of remote coverage units in the co-cell;

receiving, by the remote coverage unit, the carrier-level weighting factor of the remote coverage unit sent by the gain adjustment device; and

adjusting, by the remote coverage unit, a carrier-level uplink receive gain of the remote coverage unit according to the carrier-level weighting factor, where the carrier-level uplink receive gain of the remote coverage unit is less than 0.

According to a third aspect, an embodiment of the present invention provides a gain adjustment device, including:

an acquiring module, configured to acquire carrier-level uplink user power of a remote coverage unit in a co-cell and carrier-level uplink user power of the rest of remote coverage units in the co-cell;

a determining module, configured to determine a carrier-level weighting factor of the remote coverage unit according to the carrier-level uplink user power of the remote coverage unit and the carrier-level uplink user power of the rest of remote coverage units that are acquired by the acquiring module; and

a gain adjustment module, configured to adjust a carrier-level uplink receive gain of the remote coverage unit according to the carrier-level weighting factor of the remote coverage unit determined by the determining module, where the carrier-level uplink receive gain of the remote coverage unit is less than 0.

According to a fourth aspect, an embodiment of the present invention provides a remote coverage unit, including:

a power reporting module, configured to report carrier-level uplink user power of the remote coverage unit in a co-cell to a gain adjustment device, so that the gain adjustment device determines a carrier-level weighting factor of the remote coverage unit according to the carrier-level uplink user power of the remote coverage unit and carrier-level uplink user power of the rest of remote coverage units in the co-cell;

a receiving module, configured to receive the carrier-level weighting factor of the remote coverage unit sent by the gain adjustment device; and

a gain adjustment module, configured to adjust a carrier-level uplink receive gain of the remote coverage unit according to the carrier-level weighting factor of the remote coverage unit received by the receiving module, where the carrier-level uplink receive gain of the remote coverage unit is less than 0.

According to a fifth aspect, an embodiment of the present invention provides a gain adjustment device, including:

a transceiver, configured to communicate with a remote coverage unit in a co-cell; and
a processor, configured to acquire carrier-level uplink user power of the remote coverage unit in the co-cell and carrier-level uplink user power of the rest of remote coverage units in the co-cell, where
the processor is further configured to determine a carrier-level weighting factor of the remote coverage unit according to the carrier-level uplink user power of the remote coverage unit and the carrier-level uplink user power of the rest of remote coverage units in the co-cell that are acquired by the processor; and
the processor is further configured to adjust a carrier-level uplink receive gain of the remote coverage unit according to the carrier-level weighting factor of the remote coverage unit, where the carrier-level uplink receive gain of the remote coverage unit is less than 0.

According to a sixth aspect, an embodiment of the present invention provides a remote coverage unit, including:

a transmitter, configured to report carrier-level uplink user power of the remote coverage unit in a co-cell to a gain adjustment device, so that the gain adjustment device determines a carrier-level weighting factor of the remote coverage unit according to the carrier-level uplink user power of the remote coverage unit and carrier-level uplink user power of the rest of remote coverage units in the co-cell;
a receiver, configured to receive the carrier-level weighting factor of the remote coverage unit sent by the gain adjustment device; and
a processor, configured to adjust a carrier-level uplink receive gain of the remote coverage unit according to the carrier-level weighting factor of the remote coverage unit received by the receiver, where the carrier-level uplink receive gain of the remote coverage unit is less than 0.

According to a seventh aspect, an embodiment of the present invention provides a system for suppressing uplink background noise, including the foregoing gain adjustment device and the foregoing remote coverage unit.

The embodiments of the present invention provide a method for suppressing uplink background noise in an indoor distributed system, a device, and a system. A gain adjustment device adjusts a carrier-level uplink receive gain of a remote coverage unit according to a carrier-level weighting factor of the remote coverage unit. Because the carrier-level uplink receive gain is $10\lg\dfrac{\text{Output power}}{\text{Input power}}$, and the uplink receive gain is less than 0, power of uplink background noise on each carrier can be reduced before combination, so that power of uplink background noise after combination can be reduced, thereby achieving an objective of reducing uplink background noise that exists after combination.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1 is a schematic diagram of a network structure of a co-cell to which the present invention is applicable;
FIG. 2 is a flowchart of a method for suppressing uplink background noise in an indoor distributed system according to an embodiment of the present invention;
FIG. 3 is a flowchart of another method for suppressing uplink background noise in an indoor distributed system according to an embodiment of the present invention;
FIG. 4 is a flowchart of still another method for suppressing uplink background noise in an indoor distributed system according to an embodiment of the present invention;
FIG. 5 is a schematic structural diagram of a gain adjustment device according to an embodiment of the present invention;
FIG. 6 is a schematic structural diagram of a remote coverage unit according to an embodiment of the present invention;
FIG. 7 is a schematic structural diagram of another gain adjustment device according to an embodiment of the present invention;
FIG. 8 is a schematic structural diagram of another remote coverage unit according to an embodiment of the present invention; and

FIG. 9 is a schematic structural diagram of a system for suppressing uplink background noise according to an embodiment of the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

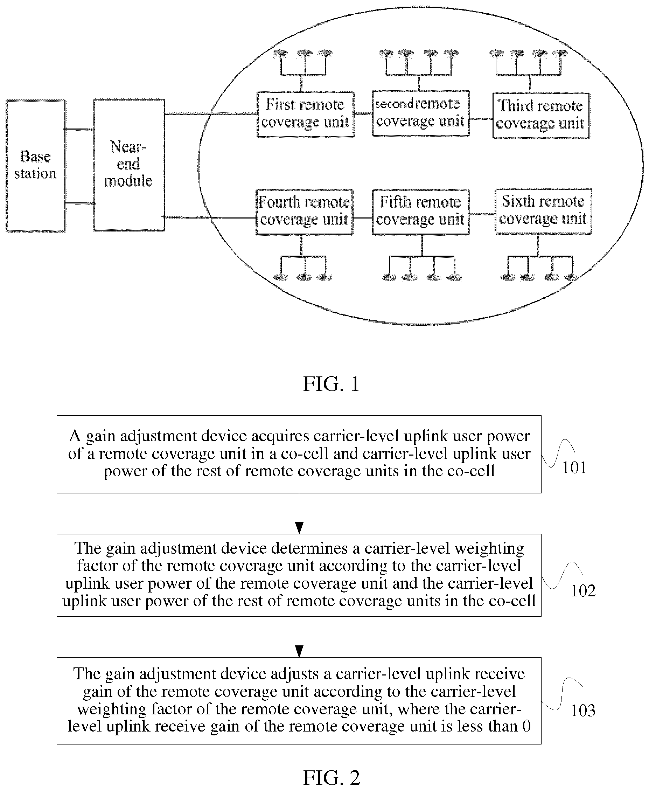

Methods provided in the embodiments of the present invention are applicable to a UMTS indoor distributed system, and a co-cell in the UMTS indoor distributed system is jointly covered by multiple remote coverage units. FIG. 1 is a schematic diagram of a network structure of a co-cell to which the present invention is applicable. As shown in FIG. 1, the co-cell includes six remote coverage units in total, where a first remote coverage unit, a second remote coverage unit, and a third remote coverage unit are connected in sequence to form a first cascade system, and a fourth remote coverage unit, a fifth remote coverage unit, and a sixth remote coverage unit are connected in sequence to form a second cascade system. The first cascade system and the second cascade system jointly cover the co-cell, and the remote coverage units may be cascaded by using an optical fiber. A remote coverage unit serving as a root node in each cascade system is directly connected to a base station or a near-end module. As shown in FIG. 1, in the first cascade system, the first remote coverage unit serving as a root node is directly connected to a near-end module, and the near-end module is connected to a base station. In the second remote cascade system, the fourth remote coverage unit serving as a root node is directly connected to the near-end module, and the near-end module is connected to the base station. It should be noted that, if no near-end module is disposed, a remote coverage unit serving as a root node may be directly connected to the base station. The remote coverage unit may be a remote remote radio unit, a distributed antenna system (distributed antenna system), or a repeater (Repeater) The near-end module may be a signal source access unit, where the signal source access unit is a physical access device. FIG. 1 is only used as an example, and a quantity of remote coverage units in a co-cell is not limited in the embodiments of the present invention.

It should be noted that, the structure shown in FIG. 1 is merely an example, and a quantity of cascade systems in a co-cell is not limited in the embodiments of the present invention.

It should be noted that, the embodiments of the present invention may also be applied to another indoor distributed system, such as a CDMA (Code Division Multiple Access, Code Division Multiple Access) indoor distributed system.

In the embodiments of the present invention, the co-cell may support single-carrier communication, and may also support multi-carrier communication. If the co-cell uses multi-carrier communication, when a user terminal accesses a UMTS by using different carriers, on different carriers, both uplink user power and noise power of the user terminal may be different. Therefore, in the embodiments of the present invention, a gain adjustment device adjusts an uplink receive gain corresponding to each carrier. For example, when the co-cell supports two-carrier communication, when uplink user power of each remote coverage unit is measured, the gain adjustment device separately measures, according to a same method, uplink user power corresponding to each of two carriers, and separately adjusts uplink receive gains corresponding to the two carriers, where the uplink user power corresponding to each carrier is also referred to as carrier-level uplink user power, and the uplink receive gain corresponding to each carrier is also referred to as a carrier-level uplink receive gain. It should be noted that, a quantity of carriers supported by a co-cell is not limited in the embodiments of the present invention.

In the embodiments of the present invention, a gain adjustment device determines a carrier-level weighting factor of each remote coverage unit according to carrier-level uplink user power of each remote coverage unit, and adjusts a carrier-level uplink receive gain of each remote coverage unit according to the carrier-level weighting factor of each remote coverage unit. For a remote coverage unit that is accessed by a large quantity of user terminals, a carrier-level weighting factor of the remote coverage unit is large, and a carrier-level uplink receive gain of the remote coverage unit is also high. For a remote coverage unit that is accessed by a small quantity of user terminals, a carrier-level weighting factor of the remote coverage unit is small, and a carrier-level uplink receive gain of the remote coverage unit is also low. The methods provided in the present invention are described in detail below by using specific examples, and each cell described in the following embodiments refers to a co-cell.

FIG. 2 is a flowchart of a method for suppressing uplink background noise in an indoor distributed system according to an embodiment of the present invention. The method provided in this embodiment of the present invention is performed by a gain adjustment device, and the gain adjustment device may be a base station or a near-end module. As shown in FIG. 2, the method of this embodiment includes the following steps:

Step 101: The gain adjustment device acquires carrier-level uplink user power of a remote coverage unit in a co-cell and carrier-level uplink user power of the rest of remote coverage units in the co-cell.

That is, the gain adjustment device needs to acquire carrier-level uplink user power of one remote coverage unit in a co-cell and carrier-level uplink user power of the rest of remote coverage units except the one remote coverage unit in the co-cell.

Carrier-level uplink user power refers to power of an uplink user signal received on each carrier by a remote coverage unit, and does not include carrier-level noise power. The gain adjustment device may acquire the carrier-level uplink user power of the remote coverage unit and the carrier-level uplink user power of the rest of remote coverage units in the co-cell in one of the following two manners: In a first acquiring manner, the gain adjustment device receives the carrier-level uplink user power of the remote coverage unit reported by the remote coverage unit and the carrier-level uplink user power of the rest of remote coverage units reported by the rest of remote coverage units. In the first acquiring manner, each remote coverage unit detects its own carrier-level uplink user power, and may periodically report the carrier-level uplink user power to the gain adjustment device. In a second acquiring manner, the gain adjustment device detects carrier-level uplink user power of each remote coverage unit; specifically, the gain adjustment device detects carrier-level total uplink power and carrier-level noise power of the remote coverage unit, and detects carrier-level total uplink power and carrier-level noise power of the rest of remote coverage units in the co-cell; the gain adjustment device determines the carrier-level uplink user power of the remote coverage unit according to the carrier-level total uplink power and the carrier-level noise power of the remote coverage unit, and determines the carrier-level uplink user power of the rest of remote coverage units in the co-cell according to the carrier-level total uplink power and the carrier-level noise power of the rest of remote coverage units in the co-cell. In this embodiment of the present invention, the gain adjustment device may obtain carrier-level total uplink power of each remote coverage unit by detecting total power of an uplink receiving channel, and carrier-level uplink user power can be obtained by subtracting carrier-level noise power from the carrier-level total uplink power. The gain adjustment device may periodically detect carrier-level total uplink power and carrier-level noise power of each remote coverage unit, and a detection period may be adjusted as required.

Step 102: The gain adjustment device determines a carrier-level weighting factor of the remote coverage unit according to the carrier-level uplink user power of the remote coverage unit and the carrier-level uplink user power of the rest of remote coverage units in the co-cell.

The gain adjustment device may determine the carrier-level weighting factor of the remote coverage unit according to the carrier-level uplink user power of the remote coverage unit and the carrier-level uplink user power of the rest of remote coverage units in the co-cell. Specifically, the gain adjustment device adds up the carrier-level uplink user power of the remote coverage unit and the carrier-level uplink user power of the rest of remote coverage units in the co-cell, to obtain carrier-level total uplink user power in the co-cell, and determines the carrier-level weighting factor of the remote coverage unit according to a ratio of the carrier-level uplink user power of the remote coverage unit to the carrier-level total uplink user power in the co-cell. In one implementation manner, the gain adjustment device uses the ratio as the carrier weighting factor of the remote coverage unit; in another implementation manner, the gain adjustment device may adjust the ratio properly, and uses an adjusted ratio as the carrier-level weighting factor of the remote coverage unit.

For example, if one remote coverage unit in the co-cell supports two carriers, for example, a carrier f1 and a carrier f2, for the one remote coverage unit, the gain adjustment device obtains two carrier-level weighting factors, that is, a carrier-level weighting factor corresponding to the carrier f1 and a carrier-level weighting factor corresponding to the carrier f2. Specifically, after acquiring carrier-level uplink user power corresponding to the carrier f1, the gain adjustment device may obtain the carrier-level weighting factor corresponding to the carrier f1 according to carrier-level uplink user power corresponding to the carrier f1 and carrier-level total uplink power in the co-cell; similarly, the gain adjustment device may also obtain the carrier-level weighting factor corresponding to the carrier f2.

It should be noted that, when the co-cell supports communication that is performed by using more than two carriers, the gain adjustment device obtains a carrier-level weighting factor corresponding to each carrier.

Step 103: The gain adjustment device adjusts a carrier-level uplink receive gain of the remote coverage unit according to the carrier-level weighting factor of the remote coverage unit, where the carrier-level uplink receive gain of the remote coverage unit is less than 0 (where 0 is excluded).

In one implementation manner, the gain adjustment device adjusts the carrier-level uplink receive gain of the remote coverage unit to 10lg($N$) decibels ($dB$) according to the carrier-level weighting factor of the remote coverage unit, where $N$ represents the carrier-level weighting factor of the remote coverage unit, and $0 < N < 1$, that is, a gain of an uplink signal sent by the remote coverage unit is adjusted to 10lg($N$) $dB$. In another implementation manner, the gain adjustment device sends a gain adjustment instruction message to the remote coverage unit, where the gain adjustment instruction message carries the carrier-level weighting factor of the remote coverage unit, so as to instruct the remote coverage unit to adjust, according to the carrier-level weighting factor, the carrier-level uplink receive gain of the remote coverage unit. After receiving the gain adjustment instruction message, the remote coverage unit adjusts a carrier-level uplink receive gain of a received uplink receiving signal to 10lg(*N*)*dB* according to the carrier-level weighting factor carried in the gain adjustment instruction message.

In the method provided in this embodiment of the present invention, a gain adjustment device adjusts a carrier-level uplink receive gain of a remote coverage unit according to a carrier-level weighting factor of the remote coverage unit. Because the carrier-level uplink receive gain is $10\lg\dfrac{\text{Output power}}{\text{Input power}}$, and the uplink receive gain is less than 0, power of uplink background noise on each carrier can be reduced before combination, so that power of uplink background noise after combination can be reduced, thereby achieving an objective of reducing uplink background noise that exists after combination.

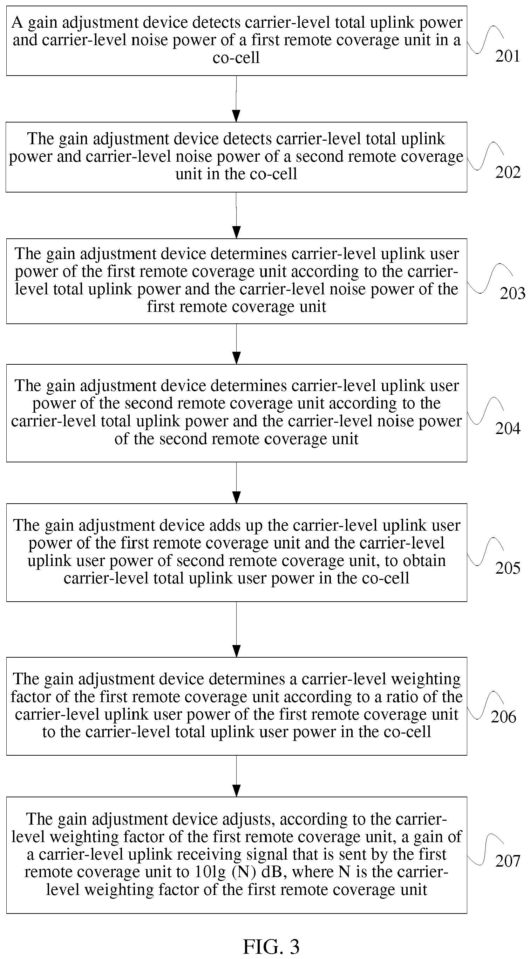

FIG. 3 is a flowchart of another method for suppressing uplink background noise in an indoor distributed system according to an embodiment of the present invention. In this embodiment of the present invention, the technical solution provided in the previous embodiment is described in detail by using specific examples. In this embodiment of the present invention, a co-cell includes two remote coverage units: a first remote coverage unit and a second remote coverage unit, and the two remote coverage units are connected in a cascading manner. As shown in FIG. 3, the method provided in this embodiment includes the following steps:

Step 201: A gain adjustment device detects carrier-level total uplink power and carrier-level noise power of a first remote coverage unit in a co-cell.

In this embodiment of the present invention, the gain adjustment device may periodically detect the carrier-level total uplink power and the carrier-level noise power of the first remote coverage unit in the co-cell. The carrier-level total uplink power includes carrier-level uplink user power and the carrier-level noise power. The gain adjustment device may obtain the carrier-level total uplink power of the first remote coverage unit by detecting total power of an uplink receiving channel of the first remote coverage unit. Various detection methods in the prior art may be used as a power detection method, and an analog detection circuit may be used, or a digital detection circuit may be used, which is not limited in this embodiment of the present invention. As another optional alternative manner, the first remote coverage unit may also detect the carrier-level total uplink power and the carrier-level noise power by itself, and reports a detection result to the gain adjustment device.

Step 202: The gain adjustment device detects carrier-level total uplink power and carrier-level noise power of a second remote coverage unit in the co-cell.

The gain adjustment device may detect the carrier-level total uplink power and the carrier-level noise power of the second remote coverage unit by using the method described in step 201, and details are not described herein again.

It should be noted that, in an actual application process, there is no strict sequence between steps 201 and 202 during execution.

Step 203: The gain adjustment device determines carrier-level uplink user power of the first remote coverage unit according to the carrier-level total uplink power and the carrier-level noise power of the first remote coverage unit.

Specifically, the gain adjustment device may subtract the carrier-level noise power of the first remote coverage unit from the carrier-level total uplink power of the first remote coverage unit to obtain the carrier-level uplink user power of the first remote coverage unit.

Step 204: The gain adjustment device determines carrier-level uplink user power of the second remote coverage unit according to the carrier-level total uplink power and the carrier-level noise power of the second remote coverage unit.

Specifically, the gain adjustment device may subtract the carrier-level noise power of the second remote coverage unit from the carrier-level total uplink power of the second remote coverage unit to obtain the carrier-level uplink user power of the second remote coverage unit.

Step 205: The gain adjustment device adds up the carrier-level uplink user power of the first remote coverage unit and the carrier-level uplink user power of second remote coverage unit, to obtain carrier-level total uplink user power in the co-cell.

In this embodiment of the present invention, it is assumed that the first remote coverage unit and the second remote coverage unit both support only single-carrier communication, the carrier-level uplink user power of the first remote coverage unit is X (X > 0), the carrier-level uplink user power of the second remote coverage unit is Y (Y > 0), and the carrier-level noise power of the first remote coverage unit and the carrier-level noise power of the second remote coverage unit are both Z(Z > 0). In this case, the carrier-level total uplink user power in the co-cell is equal to a sum of the carrier-level uplink user power of the first remote coverage unit and the carrier-level uplink user power of second remote coverage unit, that is, the carrier-level total uplink user power in the co-cell is X+Y.

It should be noted that, the carrier-level total uplink user power in the co-cell is a sum of all carrier-level uplink user power of all remote coverage units in the co-cell. For example, when the first remote coverage unit supports carriers f1 and f2, and the second remote coverage unit supports carriers f3 and f4, the carrier-level total uplink user power in the co-cell refers to a sum of uplink user power corresponding to all of the carriers f1, f2, f3 and f4.

Step 206: The gain adjustment device determines a carrier-level weighting factor of the first remote coverage unit according to a ratio of the carrier-level uplink user power of the first remote coverage unit to the carrier-level total uplink user power in the co-cell.

Specifically, the gain adjustment device may use the ratio of the carrier-level uplink user power of the first remote coverage unit to the carrier-level total uplink user power in the co-cell as the carrier-level weighting factor of the first remote coverage unit, that is, the carrier-level weighting factor of the first remote coverage unit is $\dfrac{X}{X+Y}$. Similarly, it may be obtained that a carrier-level weighting factor of the second remote coverage unit is $\dfrac{Y}{X+Y}$.

Step 207: The gain adjustment device adjusts, according to the carrier-level weighting factor of the first remote coverage unit, a gain of a carrier-level uplink receiving signal that is sent by the first remote coverage unit to 10lg(N)dB, where N is the carrier-level weighting factor of the first remote coverage unit.

That is, the gain adjustment device adjusts a carrier-level uplink receive gain of the first remote coverage unit to 10lg(N)dB, where N is the carrier-level weighting factor of the first remote coverage unit, and 0 < N < 1.

Because $N = \dfrac{X}{X+Y}$, the gain adjustment device adjusts the carrier-level uplink receive gain of the first remote coverage unit to $10 \lg(\dfrac{X}{X+Y})dB$. Because $\dfrac{X}{X+Y} < 1$, the carrier-level uplink receive gain of the first remote coverage unit is less than 0 (where 0 is excluded). It can be known from the following power-gain relational expression that, when a gain is less than 0, output power is less than input power, and when power of a carrier-level uplink signal is adjusted, power of uplink background noise in the carrier-level uplink signal is also adjusted. That is, after the carrier-level uplink receive gain of the first remote coverage unit is adjusted, the carrier-level noise power of the first remote coverage unit can be reduced.

$$\text{Gain} = 10 \lg \frac{\text{Output power}}{\text{Input power}}$$

A description is provided below with reference to a specific example. In this embodiment, the carrier-level noise power of the first remote coverage unit is $Z \times \dfrac{X}{X+Y}$, and the carrier-level noise power of the second remote coverage unit is $Z \times \dfrac{Y}{X+Y}$. In this case, carrier-level noise power after carrier-level uplink receiving signals are combined is

$Z \times \dfrac{X}{X+Y} + Z \times \dfrac{Y}{X+Y} = Z$, while in the prior art, carrier-level noise power after carrier-level uplink receiving signals are combined is 2Z. Therefore, the method provided in this embodiment can reduce power of uplink background noise that exists after combination, and reduce uplink background noise that exists after combination. If the carrier-level noise power is expressed in a form of gain, a gain of the carrier-level noise power of the first remote coverage unit is

$101g(\dfrac{Z*\frac{X}{X+Y}}{Z})dB = 101g(\dfrac{X}{X+Y})dB < 0dB$ and a gain of the carrier-level noise power of the second remote

coverage unit is $101g(\dfrac{Z*\frac{Y}{X+Y}}{Z})dB = 101g(\dfrac{Y}{X+Y})dB < 0dB$.

The method provided in this embodiment of the present invention not only can reduce power of uplink background noise that exists after uplink receiving signals are combined, but also can improve a signal-to-noise ratio of a remote coverage unit that has a relatively large carrier-level weighting factor. A signal-to-noise ratio of the first remote coverage unit is a ratio of the carrier-level uplink user power of the first remote coverage unit to the carrier-level noise power of the first remote coverage unit. When expressed in a form of a gain, a signal-to-noise ratio of the first remote coverage unit after combination is $101g(\dfrac{\frac{X^2}{X+Y}}{Z}) = 10lgX + 10lg\dfrac{X}{X+Y} - 10lgZ = 10lgX - 10lg$

$\dfrac{(X+Y) \times Z}{X}$ and a signal-to-noise ratio of the second remote coverage unit is (decibels),

$101g(\dfrac{\frac{Y^2}{X+Y}}{Z}) = 10lgY + 10lg\dfrac{Y}{X+Y} - 10lgZ = 10lgY - 10lg\dfrac{(X+Y) \times Z}{Y}$ (decibels). In the prior art, a signal-to-noise ratio of the first remote coverage unit after combination is $101g(\dfrac{X}{2Z}) = 10lgX - 10lg2Z$ (decibels), and a signal-to-noise ratio of the second remote coverage unit after combination is

$101g(\dfrac{X}{2Z}) = 10lgY - 10lg2Z$ (decibels). Using the first remote coverage unit as an example, to make the signal-to-noise ratio of the first remote coverage unit after combination higher than that in the prior art, it is required that

$\dfrac{X+Y}{X} < 2$, that is, it is required that Y<X. Therefore, a decrease in the carrier-level uplink receive gain of the remote coverage unit can further improve a signal-to-noise ratio of a remote coverage unit that has high user power. Moreover, when a difference between user power of two remote coverage units is greater, a signal-to-noise ratio of a remote coverage unit that has high user power is improved more obviously, a coverage radius of each level of remote coverage unit can be increased, and a success rate of accessing a UMTS by a user terminal is improved; from the perspective of an entire UMTS indoor distributed system, an uplink throughput rate of the UMTS indoor distributed system can be increased.

In the method provided in this embodiment, a gain adjustment device adjusts a carrier-level uplink receive gain of a remote coverage unit according to a carrier-level weighting factor of the remote coverage unit. Because the carrier-level uplink receive gain is $10lg\dfrac{\text{Output power}}{\text{Input power}}$, and the uplink receive gain is less than 0, power of uplink background noise on each carrier can be reduced before combination, so that power of uplink background noise after combination can be reduced, thereby achieving an objective of reducing uplink background noise that exists after combination.

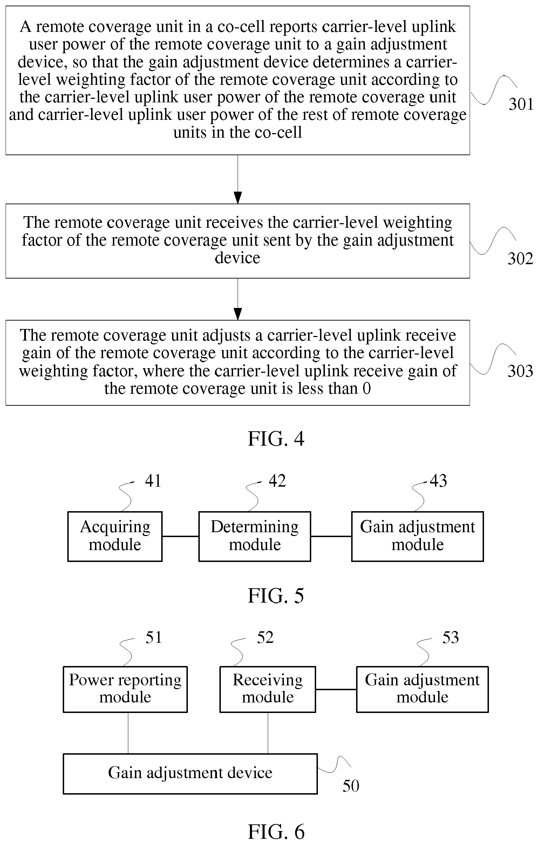

FIG. 4 is a flowchart of still another method for suppressing uplink background noise in an indoor distributed system according to an embodiment of the present invention. As shown in FIG. 4, the method provided in this embodiment includes the following steps:

Step 301: A remote coverage unit in a co-cell reports carrier-level uplink user power of the remote coverage unit to a gain adjustment device, so that the gain adjustment device determines a carrier-level weighting factor of the remote coverage unit according to the carrier-level uplink user power of the remote coverage unit and carrier-level uplink user power of the rest of remote coverage units in the co-cell.

That is, one remote coverage unit in a co-cell and the rest of remote coverage units except the one remote coverage unit in the co-cell all need to report respective carrier-level uplink user power to the gain adjustment device, that is, all remote coverage units in the co-cell need to report respective carrier-level uplink user power to the gain adjustment device. After acquiring the uplink user power of the remote coverage unit and the rest of remote coverage units in the co-cell, the gain adjustment device determines the carrier-level weighting factor of the remote coverage unit according to the carrier-level uplink user power of the remote coverage unit and the carrier-level uplink user power of the rest of remote coverage units in the co-cell. For a method of determining, by the gain adjustment device, the carrier-level weighting factor of the remote coverage unit according to the carrier-level uplink user power of the remote coverage unit and the carrier-level uplink user power of the rest of remote coverage units in the co-cell, reference may be made to related descriptions in Embodiment 1 and Embodiment 2, and details are not described herein again.

Before reporting the carrier-level uplink user power of the remote coverage unit to the gain adjustment device, the remote coverage unit further needs to acquire the carrier-level uplink user power of the remote coverage unit. Specifically, the remote coverage unit detects carrier-level total uplink power and carrier-level noise power of the remote coverage unit, and then the remote coverage unit subtracts the carrier-level noise power of the remote coverage unit from the carrier-level total uplink power of the remote coverage unit to obtain the carrier-level uplink user power of the remote coverage unit.

Step 302: The remote coverage unit receives the carrier-level weighting factor of the remote coverage unit sent by the gain adjustment device.

After determining the carrier-level weighting factor of the remote coverage unit, the gain adjustment device sends the carrier-level weighting factor of the remote coverage unit to the remote coverage unit.

Step 303: The remote coverage unit adjusts a carrier-level uplink receive gain of the remote coverage unit according to the carrier-level weighting factor, where the carrier-level uplink receive gain of the remote coverage unit is less than 0.

In a feasible implementation manner, the remote coverage unit adjusts the carrier-level uplink receive gain of the remote coverage unit to $10\lg(N)dB$ according to the carrier-level weighting factor, where $N$ is the carrier-level weighting factor of the remote coverage unit, and $0 < N < 1$.

In the method provided in this embodiment, a remote coverage unit adjusts an uplink receive gain of the remote coverage unit according to a carrier-level weighting factor of the remote coverage unit sent by a gain adjustment device. Because the carrier-level uplink receive gain is $10\lg\dfrac{\text{Output power}}{\text{Input power}}$, and the uplink receive gain is less than 0, power of uplink background noise on each carrier can be reduced before combination, so that power of uplink background noise after combination can be reduced, thereby achieving an objective of reducing uplink background noise that exists after combination.

FIG. 5 is a schematic structural diagram of a gain adjustment device according to an embodiment of the present invention. The gain adjustment device of this embodiment may be a base station or a near-end module. As shown in FIG. 5, the gain adjustment device provided in this embodiment includes:

an acquiring module 41, configured to acquire carrier-level uplink user power of a remote coverage unit in a co-cell and carrier-level uplink user power of the rest of remote coverage units in the co-cell;

a determining module 42, configured to determine a carrier-level weighting factor of the remote coverage unit according to the carrier-level uplink user power of the remote coverage unit and the carrier-level uplink user power of the rest of remote coverage units that are acquired by the acquiring module 41; and

a gain adjustment module 43, configured to adjust a carrier-level uplink receive gain of the remote coverage unit according to the carrier-level weighting factor of the remote coverage unit determined by the determining module 42, where the carrier-level uplink receive gain of the remote coverage unit is less than 0.

Specifically, the acquiring module 41 may acquire the carrier-level uplink user power of the remote coverage unit in the following two manners: In a first manner, the acquiring module 41 receives the carrier-level uplink user power of the remote coverage unit reported by the remote coverage unit and the carrier-level uplink user power of the rest of remote coverage units reported by the rest of remote coverage units; the remote coverage unit and the rest of remote coverage units in the co-cell determine respective carrier-level uplink user power by themselves, and then report the respective carrier-level uplink user power of the remote coverage unit and the rest of remote coverage units to the gain adjustment device. In a second manner, the acquiring module 41 detects carrier-level total uplink power and carrier-level noise power of the remote coverage unit in the co-cell, and detects carrier-level total uplink power and carrier-level noise power of the rest of remote coverage units in the co-cell; then, the acquiring module 41 determines the carrier-level uplink user power of the remote coverage unit according to the carrier-level total uplink power and the carrier-level noise power of the remote coverage unit in the co-cell, and determines the carrier-level uplink user power of the rest of remote coverage units in the co-cell according to the carrier-level total uplink power and the carrier-level noise power of the rest of remote coverage units in the co-cell.

That the acquiring module 41 determines the carrier-level uplink user power of the remote coverage unit according to the carrier-level total uplink power and the carrier-level noise power of the remote coverage unit in the co-cell is specifically: The acquiring module 41 subtracts the carrier-level noise power of the remote coverage unit in the co-cell from the carrier-level total uplink power of the remote coverage unit in the co-cell to obtain the carrier-level uplink user power of the remote coverage unit. That the acquiring module 41 determines the carrier-level uplink user power of the rest of remote coverage units in the co-cell according to the carrier-level total uplink power and the carrier-level noise power of the rest of remote coverage units in the co-cell is specifically: The acquiring module 41 subtracts the carrier-level noise power of the rest of remote coverage units from the carrier-level total uplink power of the rest of remote coverage units in the co-cell to obtain the carrier-level uplink user power of the rest of remote coverage units in the co-cell.

The determining module 42 is specifically configured to: add up the carrier-level uplink user power of the remote coverage unit acquired by the acquiring module 41 and the carrier-level uplink user power of the rest of remote coverage units in the co-cell acquired by the acquiring module 41, to obtain carrier-level total uplink user power in the co-cell; and then, the determining module 42 determines the carrier-level weighting factor of the remote coverage unit according to a ratio of the carrier-level uplink user power of the remote coverage unit to the carrier-level total uplink user power in the co-cell. That the determining module 42 determines the carrier-level weighting factor of the remote coverage unit according to a ratio of the carrier-level uplink user power of the remote coverage unit to the carrier-level total uplink user power in the co-cell is specifically: The determining module 42 uses the ratio of the carrier-level uplink user power of the remote coverage unit to the carrier-level total uplink user power in the co-cell as the carrier weighting factor of the remote coverage unit.

In one implementation manner, the gain adjustment module 43 sends a gain adjustment instruction message to the remote coverage unit, where the gain adjustment instruction message carries the carrier-level weighting factor of the remote coverage unit, so as to instruct the remote coverage unit to adjust, according to the carrier-level weighting factor, the carrier-level uplink receive gain of the remote coverage unit. After receiving the gain adjustment instruction message, the remote coverage unit adjusts a carrier-level uplink receive gain of a received uplink receiving signal to $10\lg(N)dB$ according to the carrier-level weighting factor carried in the gain adjustment instruction message. In another implementation manner, the gain adjustment module 43 adjusts the carrier-level uplink receive gain of the remote coverage unit to $10\lg(N)$ decibels according to the carrier-level weighting factor of the remote coverage unit, where $N$ represents the carrier-level weighting factor of the remote coverage unit, and $0 < N < 1$, that is, a gain of an uplink signal sent by the remote coverage unit is adjusted to $10\lg(N)\ dB$.

The gain adjustment device provided in this embodiment may be used to execute the technical solutions provided in Method Embodiment 1 and Method Embodiment 2, and has a similar specific implementation manner and technical effect; reference may be made to descriptions in the foregoing embodiments, and details are not described herein again.

FIG. 6 is a schematic structural diagram of a remote coverage unit according to an embodiment of the present invention. As shown in FIG. 6, the remote coverage unit provided in this embodiment includes:

a power reporting module 51, configured to report carrier-level uplink user power of the remote coverage unit in a co-cell to a gain adjustment device 50, so that the gain adjustment device 50 determines a carrier-level weighting factor of the remote coverage unit according to the carrier-level uplink user power of the remote coverage unit and carrier-level uplink user power of the rest of remote coverage units in the co-cell;

a receiving module 52, configured to receive the carrier-level weighting factor of the remote coverage unit sent by the gain adjustment device 50; and

a gain adjustment module 53, configured to adjust a carrier-level uplink receive gain of the remote coverage unit according to the carrier-level weighting factor of the remote coverage unit received by the receiving module 52, where the carrier-level uplink receive gain of the remote coverage unit is less than 0.

The gain adjustment module 53 is specifically configured to: adjust the carrier-level uplink receive gain of the remote coverage unit to $10\lg(N)dB$ according to the carrier-level weighting factor of the remote coverage unit, where $N$ is the carrier-level weighting factor of the remote coverage unit, and $0 < N < 1$.

In this embodiment, the remote coverage unit may further include: a power detection module, configured to detect carrier-level total uplink power and carrier-level noise power of the remote coverage unit; and a power determining module, configured to subtract the carrier-level noise power of the remote coverage unit from the carrier-level total uplink power of the remote coverage unit, to obtain the carrier-level uplink user power of the remote coverage unit.

The remote coverage unit provided in this embodiment may be used to execute the technical solutions provided in Method Embodiment 3, and has a similar specific implementation manner and technical effect; reference may be made to descriptions in the foregoing embodiment, and details are not described herein again.

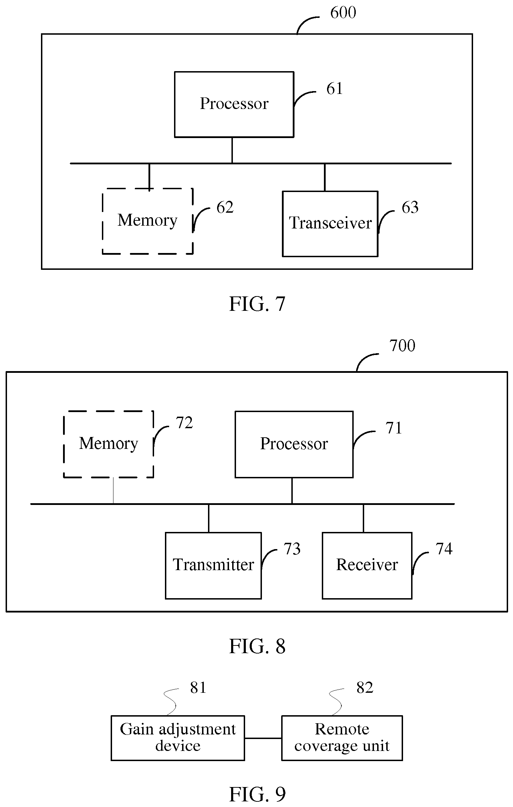

FIG. 7 is a schematic structural diagram of Embodiment 2 of another gain adjustment device according to an embodiment of the present invention. In this embodiment, the gain adjustment device may be a base station or a near-end module. As shown in FIG. 7, the gain adjustment device 600 provided in this embodiment includes: a processor 61 and a transceiver 63. The transceiver 63 is connected to the processor 61 by using a bus. The gain adjustment device provided in this embodiment may further include a memory 62. The memory 62 stores an execution instruction; when the gain adjustment device 600 runs, the processor 61 communicates with the memory 62, and the processor 61 executes the execution instruction to enable the gain adjustment device 600 to execute the method for suppressing uplink background noise in an indoor distributed system provided in the present invention.

The transceiver 63 is configured to communicate with a remote coverage unit in a co-cell.

The processor 61 is configured to acquire carrier-level uplink user power of the remote coverage unit in the co-cell and carrier-level uplink user power of the rest of remote coverage units in the co-cell.

The processor 61 is further configured to determine a carrier-level weighting factor of the remote coverage unit according to the carrier-level uplink user power of the remote coverage unit and the carrier-level uplink user power of the rest of remote coverage units in the co-cell that are acquired by the processor 61.

The processor 61 is further configured to adjust a carrier-level uplink receive gain of the remote coverage unit according to the carrier-level weighting factor of the remote coverage unit, where the carrier-level uplink receive gain of the remote coverage unit is less than 0.

In this embodiment, when adjusting the carrier-level uplink receive gain of the remote coverage unit, the processor 61 may be specifically configured to send a gain adjustment instruction message to the remote coverage unit by using the transceiver 63, where the gain adjustment instruction message carries the carrier-level weighting factor determined by the processor 61, so as to instruct the remote coverage unit to adjust the carrier-level uplink receive gain according to the carrier-level weighting factor.

When adjusting the carrier-level uplink receive gain of the remote coverage unit, the processor 61 may be specifically configured to: adjust the carrier-level uplink receive gain of the remote coverage unit to $10\lg(N)dB$ according to the carrier-level weighting factor of the remote coverage unit, where $N$ is the carrier-level weighting factor of the remote coverage unit, and $0 < N < 1$.

In this embodiment, the processor 61 may acquire the carrier-level uplink user power of the remote coverage unit in the co-cell and the carrier-level uplink user power of the rest of remote coverage units in the co-cell in any one of the following two manners: In a first acquiring manner, the processor 61 detects carrier-level total uplink power and carrier-level noise power of the remote coverage unit in the co-cell, and detects carrier-level total uplink power and carrier-level noise power of the rest of remote coverage units in the co-cell; then, the processor 61 determines the carrier-level uplink user power of the remote coverage unit in the co-cell according to the carrier-level total uplink power and the carrier-level noise power of the remote coverage unit in the co-cell, and determines the carrier-level uplink user power of the rest of remote coverage units in the co-cell according to the carrier-level total uplink power and the carrier-level noise power of the rest of remote coverage units in the co-cell. Specifically, the processor 61 subtracts the carrier-level noise power of the remote coverage unit in the co-cell from the carrier-level total uplink power of the remote coverage unit in the co-cell, to obtain the carrier-level uplink user power of the remote coverage unit; and the processor 61 subtracts the carrier-level noise power of the rest of remote coverage units from the carrier-level total uplink power of the rest of remote coverage units in the co-cell, to obtain the carrier-level uplink user power of the rest of remote coverage units in the co-cell. In a second acquiring manner, the processor 61 receives, by using the transceiver 63, the carrier-level uplink user power reported by the remote coverage unit and the carrier-level uplink user power reported by the rest of remote coverage units.

The processor 61 is specifically configured to determine the carrier-level weighting factor of the remote coverage unit in the following manner: The processor 61 adds up the carrier-level uplink user power of the remote coverage unit acquired by the processor 61 and the carrier-level uplink user power of the rest of remote coverage units in the co-cell acquired by the processor 61, to obtain carrier-level total uplink user power in the co-cell; and then the processor 61 determines the carrier-level weighting factor of the remote coverage unit according to a ratio of the carrier-level uplink user power of the remote coverage unit to the carrier-level total uplink user power in the co-cell. The processor 61 may use the ratio of the carrier-level uplink user power of the remote coverage unit to the carrier-level total uplink user power in the co-cell as the carrier weighting factor of the remote coverage unit.

The gain adjustment device provided in this embodiment may be used to execute the technical solutions provided in Method Embodiment 1 and Method Embodiment 2, and has a similar specific implementation manner and technical effect; reference may be made to descriptions in the foregoing embodiments, and details are not described herein again.

FIG. 8 is a schematic structural diagram of another remote coverage unit according to an embodiment of the present invention. As shown in FIG. 8, the remote coverage unit 700 provided in this embodiment includes: a processor 71, a transmitter 73, and a receiver 74. The transmitter 73 and the receiver 74 are connected to the processor 71 by using a bus. The remote coverage unit provided in this embodiment may further include a memory 72. The memory 72 stores an execution instruction; when the remote coverage unit 700 runs, the processor 71 communicates with the memory 72, and the processor 71 executes the execution instruction to enable the remote coverage unit 700 to execute the method for suppressing uplink background noise in an indoor distributed system provided in the present invention.

The transmitter 73 is configured to report carrier-level uplink user power of the remote coverage unit in a co-cell to a gain adjustment device, so that the gain adjustment device determines a carrier-level weighting factor of the remote coverage unit according to the carrier-level uplink user power of the remote coverage unit and carrier-level uplink user power of the rest of remote coverage units in the co-cell.

The receiver 74 is configured to receive the carrier-level weighting factor of the remote coverage unit sent by the gain adjustment device.

The processor 71 is configured to adjust a carrier-level uplink receive gain of the remote coverage unit according to the carrier-level weighting factor of the remote coverage unit received by the receiver 74, where the carrier-level uplink receive gain of the remote coverage unit is less than 0.

The processor 71 is specifically configured to: adjust the carrier-level uplink receive gain of the remote coverage unit to $10\lg(N)dB$ according to the carrier-level weighting factor of the remote coverage unit, where $N$ is the carrier-level weighting factor of the remote coverage unit, and $0 < N < 1$.

In this embodiment, the processor 71 is further configured to: detect carrier-level total uplink power and carrier-level noise power of the remote coverage unit; and subtract the carrier-level noise power of the remote coverage unit from the carrier-level total uplink power of the remote coverage unit, to obtain the carrier-level uplink user power of the remote coverage unit.

The remote coverage unit provided in this embodiment may be used to execute the technical solutions provided in Method Embodiment 3, and has a similar specific implementation manner and technical effect; reference may be made to descriptions in the foregoing embodiment, and details are not described herein again.

FIG. 9 is a schematic structural diagram of a system for suppressing uplink background noise according to an embodiment of the present invention. As shown in FIG. 9, the system for suppressing uplink background noise provided in this embodiment includes a gain adjustment device 81 and a remote coverage unit 82, where the gain adjustment device 81 may be any one of the gain adjustment devices in the foregoing embodiments, and the remote coverage unit 82 may be any one of the remote coverage units in the foregoing embodiments. This embodiment may include multiple remote coverage units, and a quantity of the remote coverage units is not limited.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

**Claims**

1. A gain adjustment device, comprising:

   an acquiring module (41), configured to acquire carrier-level uplink user power of a remote coverage unit in a co-cell and carrier-level uplink user power of the rest of remote coverage units in the co-cell; wherein the co-cell is a cell jointly covered by multiple remote coverage units, which are controlled by a same baseband unit; wherein the uplink user power corresponding to each carrier is referred to as carrier-level uplink user power; wherein the acquiring module is specifically configured to:

detect carrier-level total uplink power and carrier-level noise power of the remote coverage unit in the co-cell;

detect carrier-level total uplink power and carrier-level noise power of the rest of remote coverage units in the co-cell;

subtract the carrier-level noise power of the remote coverage unit in the co-cell from the carrier-level total uplink power of the remote coverage unit in the co-cell, to obtain the carrier-level uplink user power of the remote coverage unit; and

subtract the carrier-level noise power of the rest of remote coverage units from the carrier-level total uplink power of the rest of remote coverage units in the co-cell, to obtain the carrier-level uplink user power of the rest of remote coverage units in the co-cell;

a determining module (42), configured to determine a carrier-level weighting factor of the remote coverage unit according to the carrier-level uplink user power of the remote coverage unit and the carrier-level uplink user power of the rest of remote coverage units that are acquired by the acquiring module;

wherein the determining module is specifically configured to:

add up the carrier-level uplink user power of the remote coverage unit acquired by the acquiring module and the carrier-level uplink user power of the rest of remote coverage units in the co-cell acquired by the acquiring module, to obtain carrier-level total uplink user power in the co-cell; and

determine the carrier-level weighting factor of the remote coverage unit according to a ratio of the carrier-level uplink user power of the remote coverage unit to the carrier-level total uplink user power in the co-cell; and

a gain adjustment module (43), configured to adjust a carrier-level uplink receive gain of the remote coverage unit according to the carrier-level weighting factor of the remote coverage unit determined by the determining module, wherein the carrier-level uplink receive gain of the remote coverage unit is less than 0.

2. The gain adjustment device according to claim 1, wherein the gain adjustment module is specifically configured to: send a gain adjustment instruction message to the remote coverage unit, wherein the gain adjustment instruction message carries the carrier-level weighting factor, so as to instruct the remote coverage unit to adjust, according to the carrier-level weighting factor, the carrier-level uplink receive gain.

3. The gain adjustment device according to claim 1, wherein the gain adjustment module is specifically configured to: adjust the carrier-level uplink receive gain of the remote coverage unit to $10\lg(N)dB$ according to the carrier-level weighting factor of the remote coverage unit, wherein $N$ is the carrier-level weighting factor of the remote coverage unit, and $0 < N < 1$.

4. A system comprising a gain adjustment device according to any of claims 1-3 and a plurality of remote coverage units, wherein each remote coverage unit comprising:

a power reporting module (51), configured to report carrier-level uplink user power of the remote coverage unit in a co-cell to a gain adjustment device, so that the gain adjustment device determines a carrier-level weighting factor of the remote coverage unit according to the carrier-level uplink user power of the remote coverage unit and carrier-level uplink user power of the rest of remote coverage units in the co-cell;

a receiving module (52), configured to receive the carrier-level weighting factor of the remote coverage unit sent by the gain adjustment device; and

a gain adjustment module (53), configured to adjust a carrier-level uplink receive gain of the remote coverage unit according to the carrier-level weighting factor of the remote coverage unit received by the receiving module, wherein the carrier-level uplink receive gain of the remote coverage unit is less than 0.

5. The system according to claim 4, wherein the gain adjustment module of the remote coverage unit is specifically configured to:

adjust the carrier-level uplink receive gain of the remote coverage unit to $10\lg(N)dB$ according to the carrier-level weighting factor of the remote coverage unit, wherein $N$ is the carrier-level weighting factor of the remote coverage unit, and $0 < N < 1$.

6. A method for suppressing uplink background noise in an indoor distributed system, comprising steps of:

(1) acquiring, by a gain adjustment device, carrier-level uplink user power of a remote coverage unit in a co-cell and carrier-level uplink user power of the rest of remote coverage units in the co-cell; wherein the co-cell is a cell jointly covered by multiple remote coverage units, which are controlled by a same baseband unit; wherein the uplink user power corresponding to each carrier is referred to as carrier-level uplink user power; wherein the acquiring step further comprises the steps of:

detecting carrier-level total uplink power and carrier-level noise power of the remote coverage unit in the co-cell;

detecting carrier-level total uplink power and carrier-level noise power of the rest of remote coverage units in the co-cell;

subtracting the carrier-level noise power of the remote coverage unit in the co-cell from the carrier-level total uplink power of the remote coverage unit in the co-cell, to obtain the carrier-level uplink user power of the remote coverage unit; and

subtracting the carrier-level noise power of the rest of remote coverage units from the carrier-level total uplink power of the rest of remote coverage units in the co-cell, to obtain the carrier-level uplink user power of the rest of remote coverage units in the co-cell;

(2) determining, by the gain adjustment device, a carrier-level weighting factor of the remote coverage unit according to the carrier-level uplink user power of the remote coverage unit and the carrier-level uplink user power of the rest of remote coverage units in the co-cell;
wherein the determining step further comprises the steps of:

adding up the acquired carrier-level uplink user power of the remote coverage unit and the acquired carrier-level uplink user power of the rest of remote coverage units in the co-cell, to obtain carrier-level total uplink user power in the co-cell; and

determining the carrier-level weighting factor of the remote coverage unit according to a ratio of the carrier-level uplink user power of the remote coverage unit to the carrier-level total uplink user power in the co-cell; and

(3) adjusting, by the gain adjustment device, a carrier-level uplink receive gain of the remote coverage unit according to the carrier-level weighting factor of the remote coverage unit, wherein the carrier-level uplink receive gain of the remote coverage unit is less than 0.

7. The method according to claim 6, wherein the adjusting, by the gain adjustment device, a carrier-level uplink receive gain of the remote coverage unit according to the carrier-level weighting factor of the remote coverage unit comprises: sending, by the gain adjustment device, a gain adjustment instruction message to the remote coverage unit, wherein the gain adjustment instruction message carries the carrier-level weighting factor of the remote coverage unit, so as to instruct the remote coverage unit to adjust, according to the carrier-level weighting factor of the remote coverage unit, the carrier-level uplink receive gain.

8. The method according to claim 6, wherein the adjusting, by the gain adjustment device, a carrier-level uplink receive gain of the remote coverage unit according to the carrier-level weighting factor of the remote coverage unit comprises: adjusting, by the gain adjustment device, the carrier-level uplink receive gain of the remote coverage unit to 10lg($N$)$dB$, wherein $N$ is the carrier-level weighting factor of the remote coverage unit, and $0 < N < 1$.

**Patentansprüche**

1. VerstärkuBgseinstellungsvorrichtung, umfassend:

ein Erfassungsmodul (41), das konfiguriert ist, um die Trägerebenen-Uplink-Benutzerleistung einer entfernten Abdeckungseinheit in einer Co-Zelle und die Trägerebenen-Uplink-Benutzerleistung der restlichen entfernten Abdeckungseinheiten in der Co-Zelle zu erfassen; wobei die Co-Zelle eine Zelle ist, die gemeinsam von mehreren entfernten Abdeckungseinheiten abgedeckt wird, die von einer gleichen Basisbandeinheit gesteuert werden; wobei die Uplink-Benutzerleistung, die jedem Träger entspricht, als Trägerebenen-Uplink-Benutzerleistung bezeichnet wird;
wobei das Erfassungsmodul insbesondere konfiguriert ist, um:

die gesamte Trägerebenen-Uplink-Leistung und die Trägerebenen-Rauschleistung der entfernten Abdeckungseinheit in der Co-Zelle zu detektieren;

die gesamte Trägerebenen-Uplink-Leistung und die Trägerebenen-Rauschleistung der restlichen entfernten Abdeckungseinheiten in der Co-Zelle zu detektieren;

die Trägerebenen-Rauschleistung der entfernten Abdeckungseinheit in der Co-Zelle von der gesamten Trägerebenen-Uplink-Leistung der entfernten Abdeckungseinheit in der Co-Zelle zu subtrahieren, um die Trägerebcnen-Uplink-Benutzerleistung der entfernten Abdeckungseinheit zu erhalten; und

die Trägerebenen-Rauschleistung der restlichen entfernten Abdeckungseinheiten von der gesamten Trägerebenen-Uplink-Leistung der restlichen entfernten Abdeckungseinheiten in der Co-Zelle zu subtrahieren, um die Trägerebenen-Uplink-Benutzerleistung der restlichen entfernten Abdeckungseinheiten in der Co-Zelle zu erhalten;

ein Bestimmungsmodul (42), das konfiguriert ist, um einen Trägerebenen-Gewichtungsfaktor der entfernten Abdeckungseinheit gemäß der Trägerebenen-Uplink-Benutzerleistung der entfernten Abdeckungseinheit und der Trägerebenen-Uplink-Benutzerleistung der restlichen entfernten Abdeckungseinheiten zu bestimmen, die von dem Erfassungsmodul erfasst werden;

wobei das Bestimmungsmodul insbesondere konfiguriert ist, um:

die Trägerebenen-Uplink-Benutzerleistung der entfernten Abdeckungseinheit, die von dem Erfassungsmodul erfasst wurde, und die Trägerebenen-Uplink-Benutzerleistung der restlichen entfernten Abdeckungseinheiten in der Co-Zelle, die von dem Erfassungsmodul erfasst wurden, zu addieren, um die gesamte Trägerebenen-Uplink-Benutzerleistung in der Co-Zelle zu erhalten; und

den Trägerebenen-Gewichtungsfaktor der entfernten Abdeckungseinheit gemäß einem Verhältnis der Trägerebenen-Uplink-Benutzerleistung der entfernten Abdeckungseinheit zu der gesamten Trägerebenen-Uplink-Benutzerleistung in der Co-Zelle zu bestimmen; und

ein Verstärkungseinstellungsmodul (43), das konfiguriert ist, um eine Trägerebenen-Uplink-Empfangsverstärkung der entfernten Abdeckungseinheit gemäß dem Trägerebenen-Gewichtungsfaktor der entfernten Abdeckungseinheit einzustellen, der von dem Bestimmungsmodul bestimmt wird, wobei die Trägerebenen-Uplink-Empfangsverstärkung der entfernten Abdeckungseinheit kleiner als 0 ist.

2. Verstärkungseinstellungsvorrichtung nach Anspruch 1, wobei das Verstärkungseinstellungsmodul insbesondere konfiguriert ist, um:
eine Verstärkungseinstellungs-Anweisungsnachricht an die entfernte Abdeckungseinheit zu senden, wobei die Verstärkungseinstellungs-Anweisungsnachricht den Trägerebenen-Gewichtungsfaktor trägt, um so die entfernte Abdeckungseinheit anzuweisen, die Trägerebenen-Uplink-Empfangsverstärkung gemäß dem Trägerebenen-Gewichtungsfaktor einzustellen.

3. Verstärkungseinstellungsvorrichtung nach Anspruch 1, wobei das Verstärkungseinstellungsmodul insbesondere konfiguriert ist, um:
die Trägerebenen-Uplink-Empfangsverstärkung der entfernten Abdeckungseinheit auf **10 lg (N) dB** gemäß dem Trägerebenen-Gewichtungsfaktor der entfernten Abdeckungseinheit einzustellen, wobei N der Trägerebencn-Gewichtungsfaktor der entfernten Abdeckungseinheit ist und 0 < N < 1 ist.

4. System, umfassend eine Verstärkungseinstellungsvorrichtung nach einem der Ansprüche 1 bis 3 und eine Vielzahl von entfernten Abdeckungseinheiten, wobei jede entfernte Abdeckungseinheit umfasst:

ein Leistungsberichtsmodul (51), das konfiguriert ist, um die Trägerebenen-Uplink-Benutzerleistung der entfernten Abdeckungseinheit in einer Co-Zelle an eine Verstärkungseinstellungsvorrichtung zu berichten, sodass die Verstärkungseinstellungsvorrichtung einen Trägerebenen-Gewichtungsfaktor der entfernten Abdeckungseinheit gemäß der Trägerebenen-Uplink-Benutzerleistung der entfernten Abdeckungseinheit und der Trägerebenen-Uplink-Benutzerleistung der restlichen entfernten Abdeckungseinheiten in der Co-Zelle bestimmt;

ein Empfangsmodul (52), das konfiguriert ist, um den Trägerebenen-Gewichtungsfaktor der entfernten Abdeckungseinheit zu empfangen, der von der Verstärkungseinstellungsvorrichtung gesendet wird; und

ein Verstärkungseinstellungsmodul (53), das konfiguriert ist, um eine Trägerebenen-Uplink-Empfangsverstärkung der entfernten Abdeckungseinheit gemäß dem Trägerebenen-Gewichtungsfaktor der entfernten Abdeckungseinheit einzustellen, der von dem Empfangsmodul empfangen wird, wobei die Trägerebenen-Uplink-Empfangsverstärkung der entfernten Abdeckungseinheit kleiner als 0 ist.

5. System nach Anspruch 4, wobei das Verstärkungseinstellungsmodul der entfernten Abdeckungseinheit insbesondere konfiguriert ist, um:

die Trägerebenen-Uplink-Empfangsverstärkung der entfernten Abdeckungseinheit auf **10 lg (N) dB** gemäß dem Trägerebenen-Gewichtungsfaktor der entfernten Abdeckungseinheit einzustellen, wobei N der Trägerebenen-Gewichtungsfaktor der entfernten Abdeckungseinheit ist und 0 < N < 1 ist.

6. Verfahren zur Unterdrückung von Hintergrundrauschen in einem verteilten Innenraumsystem, umfassend die folgenden Schritte:

(1) Erfassen, durch eine Verstärkungseinstellungsvorrichtung, der Trägerebenen-Uplink-Benutzerleistung einer entfernten Abdeckungseinheit in einer Co-Zelle und der Trägerebenen-Uplink-Benutzerleistung der restlichen entfernten Abdeckungseinheiten in der Co-Zelle; wobei die Co-Zelle eine Zelle ist, die gemeinsam von mehreren entfernten Abdeckungseinheiten abgedeckt wird, die von einer gleichen Basisbandeinheit gesteuert werden; wobei die Uplink-Benutzerleistung, die jedem Träger entspricht, als Trägerebenen-Uplink-Benutzerleistung bezeichnet wird;
wobei der Erfassungsschritt ferner die folgenden Schritte umfasst:

Detektieren der gesamten Trägerebenen-Uplink-Leistung und der Trägerebenen-Rauschleistung der entfernten Abdeckungseinheit in der Co-Zelle;
Detektieren der gesamten Trägerebenen-Uplink-Leistung und der Trägerebenen-Rauschleistung der restlichen entfernten Abdeckungseinheiten in der Co-Zelle;
Subtrahieren der Trägerebenen-Rauschleistung der entfernten Abdeckungseinheit in der Co-Zelle von der gesamten Trägerebenen-Uplink-Leistung der entfernten Abdeckungseinheit in der Co-Zelle, um die Trägerebenen-Uplink-Benutzerleistung der entfernten Abdeckungseinheit zu erhalten; und
Subtrahieren der Trägerebenen-Rauschleistung der restlichen entfernten Abdeckungseinheiten von der gesamten Trägerebenen-Uplink-Leistung der restlichen entfernten Abdeckungseinheiten in der Co-Zelle, um die Trägerebenen-Uplink-Benutzerleistung der restlichen entfernten Abdeckungseinheiten in der Co-Zelle zu erhalten;

(2) Bestimmen, durch die Verstärkungseinstellungsvorrichtung, eines Trägerebenen-Gewichtungsfaktors der entfernten Abdeckungseinheit gemäß der Trägerebenen-Uplink-Benutzerleistung der entfernten Abdeckungseinheit und der Trägerebenen-Uplink-Benutzerleistung der restlichen entfernten Abdeckungseinheiten in der Co-Zelle;
wobei der Bestimmungsschritt ferner die folgenden Schritte umfasst:

Addieren der erfassten Trägerebenen-Uplink-Benutzerleistung der entfernten Abdeckungseinheit und der erfassten Trägerebenen-Uplink-Benutzerleistung der restlichen entfernten Abdeckungseinheiten in der Co-Zelle, um die gesamte Trägerebenen-Uplink-Benutzerleistung in der Co-Zelle zu erhalten; und
Bestimmen des Trägerebenen-Gewichtungsfaktors der entfernten Abdeckungseinheit gemäß einem Verhältnis der Trägerebenen-Uplink-Benutzerleistung der entfernten Abdeckungseinheit zu der gesamten Trägerebenen-Uplink-Benutzerleistung in der Co-Zelle; und

(3) Einstellen, durch die Verstärkungseinstellungsvorrichtung, einer Trägerebenen-Uplink-Empfangsverstärkung der entfernten Abdeckungseinheit gemäß dem Trägerebenen-Gewichtungsfaktor der entfernten Abdeckungseinheit, wobei die Trägerebenen-Uplink-Empfangsverstärkung der entfernten Abdeckungseinheit kleiner als 0 ist.

7. Verfahren nach Anspruch 6, wobei das Einstellen, durch die Verstärkungseinstellungsvorrichtung, einer Trägerebenen-Uplink-Empfangsverstärkung der entfernten Abdeckungseinheit gemäß dem Trägerebenen-Gewichtungsfaktor der entfernten Abdeckungseinheit umfasst:
Senden, durch die Verstärkungseinstellungsvorrichtung, einer Verstärkungseinstellungs-Anweisungsnachricht an die entfernte Abdeckungseinheit, wobei die Verstärkungseinstellungs-Anweisungsnachricht den Trägerebenen-Gewichtungsfaktor der entfernten Abdeckungseinheit trägt, um so die entfernte Abdeckungseinheit anzuweisen, die Trägerebenen-Empfangsverstärkung gemäß dem Trägerebenen-Gewichtungsfaktor der entfernten Abdeckungseinheit einzustellen

8. Verfahren nach Anspruch 6, wobei das Einstellen, durch die Verstärkungseinstellungsvorrichtung, einer Trägerebenen-Uplink-Empfangsverstärkung der entfernten Abdeckungseinheit gemäß dem Trägerebenen-Gewichtungsfaktor der entfernten Abdeckungseinheit umfasst:
Einstellen, durch die Verstärkungseinstellungsvorrichtung, der Trägerebenen-Uplink-Empfangsverstärkung der entfernten Abdeckungseinheit auf **10 lg (N) dB**, wobei N der Trägerebenen-Gewichtungsfaktor der entfernten Abdeckungseinheit ist und 0 < N < 1 ist.

**Revendications**

1.  Dispositif d'ajustement de gain, comprenant :

    un module d'acquisition (41), configuré pour acquérir une puissance d'utilisateur de liaison montante au niveau porteuse d'une unité de couverture distante dans une co-cellule et une puissance d'utilisateur de liaison montante au niveau porteuse du reste des unités de couverture distantes dans la co-cellule ; dans lequel la co-cellule est une cellule couverte conjointement par de multiples unités de couverture distantes, lesquelles sont commandées par une même unité en bande de base ; dans lequel la puissance d'utilisateur de liaison montante correspondant à chaque porteuse est appelée puissance d'utilisateur de liaison montante au niveau porteuse ;
    dans lequel le module d'acquisition est configuré spécifiquement pour :

    détecter une puissance de liaison montante totale au niveau porteuse et une puissance de bruit au niveau porteuse de l'unité de couverture distante dans la co-cellule ;
    détecter une puissance de liaison montante totale au niveau porteuse et une puissance de bruit au niveau porteuse du reste des unités de couverture distantes dans la co-cellule ;
    soustraire la puissance de bruit au niveau porteuse de l'unité de couverture distante dans la co-cellule de la puissance de liaison montante totale au niveau porteuse de l'unité de couverture distante dans la co-cellule, de manière à obtenir la puissance d'utilisateur de liaison montante au niveau porteuse de l'unité de couverture distante ; et
    soustraire la puissance de bruit au niveau porteuse du reste des unités de couverture distantes de la puissance de liaison montante totale au niveau porteuse du reste des unités de couverture distantes dans la co-cellule, de manière à obtenir la puissance d'utilisateur de liaison montante au niveau porteuse du reste des unités de couverture distantes dans la co-cellule ;
    un module de détermination (42), configuré pour déterminer un facteur de pondération au niveau porteuse de l'unité distante conformément à la puissance d'utilisateur de liaison montante au niveau porteuse de l'unité de couverture distante et à la puissance d'utilisateur de liaison montante au niveau porteuse du reste des unités de couverture distantes qui sont acquises par le module d'acquisition ;

    dans lequel le module de détermination est configuré spécifiquement pour :

    ajouter la puissance de l'utilisateur de liaison montante au niveau porteuse de l'unité de couverture distante acquise par le module d'acquisition et la puissance de l'utilisateur de liaison montante au niveau porteuse du reste des unités de couverture distantes dans la co-cellule acquise par le module d'acquisition, de manière à obtenir une puissance d'utilisateur de liaison montante totale au niveau porteuse dans la co-cellule ; et
    déterminer le facteur de pondération au niveau porteuse de l'unité de couverture distante conformément à un rapport de la puissance d'utilisateur de liaison montante au niveau porteuse de l'unité de couverture distante sur la puissance d'utilisateur de liaison montante totale au niveau porteuse dans la co-cellule ; et
    un module d'ajustement de gain (43), configuré pour ajuster un gain de réception de liaison montante au niveau porteuse de l'unité de couverture distante conformément au facteur de pondération au niveau porteuse de l'unité de couverture distante déterminé par le module de détermination, dans lequel le gain de réception de liaison montante au niveau porteuse de l'unité de couverture distante est inférieur à 0.

2.  Dispositif d'ajustement de gain selon la revendication 1, dans lequel le module d'ajustement de gain est configuré spécifiquement pour :
    envoyer un message d'instruction d'ajustement de gain à l'unité de couverture distante, dans lequel le message d'instruction d'ajustement de gain porte le facteur de pondération au niveau porteuse, de manière à instruire l'unité de couverture distante d'ajuster, conformément au facteur de pondération au niveau porteuse, le gain de réception de liaison montante au niveau porteuse.

3.  Dispositif d'ajustement de gain selon la revendication 1, dans lequel le module d'ajustement de gain est configuré spécifiquement pour :
    ajuster le gain de réception de liaison montante au niveau porteuse de l'unité de couverture distante à $10\lg(N)dB$

conformément au facteur de pondération au niveau porteuse de l'unité de couverture distante, dans lequel *N* est le facteur de pondération au niveau porteuse de l'unité de couverture distante, et 0 < *N* < 1.

4. Système comprenant un dispositif d'ajustement de gain selon l'une quelconque des revendications 1 à 3 et une pluralités d'unités de couverture distantes,
dans lequel chaque unité de couverture distante comprend :

un module de signalisation de puissance (51), configuré pour signaler une puissance d'utilisateur de liaison montante au niveau porteuse de l'unité de couverture distante dans une co-cellule à un dispositif d'ajustement de gain, de telle sorte que le dispositif d'ajustement de gain détermine un facteur de pondération au niveau porteuse de l'unité de couverture distante conformément à la puissance d'utilisateur de liaison montante au niveau porteuse de l'unité de couverture distante et à la puissance d'utilisateur de liaison montante au niveau porteuse du reste des unités de couverture distantes dans la co-cellule ;
un module de réception (52), configuré pour recevoir le facteur de pondération au niveau porteuse de l'unité de couverture distante envoyé par le dispositif d'ajustement de gain ; et
un module d'ajustement de gain (53), configuré pour ajuster un gain de réception de liaison montante au niveau porteuse de l'unité de couverture distante conformément au facteur de pondération au niveau porteuse de l'unité de couverture distante reçu par le module de réception, dans lequel le gain de réception de liaison montante au niveau porteuse de l'unité de couverture distante est inférieur à 0.

5. Système selon la revendication 4, dans lequel le module d'ajustement de gain de l'unité de couverture distante est configuré spécifiquement pour :
ajuster le gain de réception de liaison montante au niveau porteuse de l'unité de couverture distante à 10*lg(N)dB* conformément au facteur de pondération au niveau porteuse de l'unité de couverture distante, dans lequel *N* est le facteur de pondération au niveau porteuse de l'unité de couverture distante, et 0 < *N* < 1.

6. Procédé de suppression de bruit de fond de liaison montante dans un système intérieur distribué, comprenant les étapes suivantes :

(1) l'acquisition, par un dispositif d'ajustement de gain, d'une puissance d'utilisateur de liaison montante au niveau porteuse d'une unité de couverture distante dans une co-cellule et d'une puissance d'utilisateur de liaison montante au niveau porteuse du reste des unités de couverture distantes dans la co-cellule ; dans lequel la co-cellule est une cellule couverte conjointement par de multiples unités de couverture distantes, lesquelles sont commandées par une même unité en bande de base ; dans lequel la puissance d'utilisateur de liaison montante correspondant à chaque porteuse est appelée puissance d'utilisateur de liaison montante au niveau porteuse ;
dans lequel l'étape d'acquisition comprend en outre les étapes suivantes :

la détection d'une puissance de liaison montante totale au niveau porteuse et d'une puissance de bruit au niveau porteuse de l'unité de couverture distante dans la co-cellule ;
la détection d'une puissance de liaison montante totale au niveau porteuse et d'une puissance de bruit au niveau porteuse du reste des unités de couverture distantes dans la co-cellule ;
la soustraction de la puissance de bruit au niveau porteuse de l'unité de couverture distante dans la co-cellule de la puissance de liaison montante totale au niveau porteuse de l'unité de couverture distante dans la co-cellule, de manière à obtenir la puissance d'utilisateur de liaison montante au niveau porteuse de l'unité de couverture distante ; et
la soustraction de la puissance de bruit au niveau porteuse du reste des unités de couverture distantes de la puissance de liaison montante totale au niveau porteuse du reste des unités de couverture distantes dans la co-cellule, de manière à obtenir la puissance d'utilisateur de liaison montante au niveau porteuse du reste des unités de couverture distantes dans la co-cellule ;

(2) la détermination, par le dispositif d'ajustement de gain, d'un facteur de pondération au niveau porteuse de l'unité de couverture distante conformément à la puissance d'utilisateur de liaison montante au niveau porteuse de l'unité de couverture distante et à la puissance d'utilisateur de liaison montante au niveau porteuse du reste des unités de couverture distantes dans la co-cellule ;
dans lequel l'étape de détermination comprend en outre les étapes suivantes :

l'ajout de la puissance d'utilisateur de liaison montante au niveau porteuse de l'unité de couverture distante et de la puissance d'utilisateur de liaison montante au niveau porteuse du reste des unités de couverture distantes dans la co-cellule, de manière à obtenir une puissance d'utilisateur de liaison montante totale au niveau porteuse dans la co-cellule ; et

la détermination du facteur de pondération au niveau porteuse de l'unité de couverture distante conformément à un rapport de la puissance d'utilisateur de liaison montante au niveau porteuse de l'unité de couverture distante sur la puissance d'utilisateur de liaison montante totale au niveau porteuse dans la co-cellule ; et

(3) l'ajustement, par le dispositif d'ajustement de gain, d'un gain de réception de liaison montante au niveau porteuse de l'unité de couverture distante conformément au facteur de pondération au niveau porteuse de l'unité de couverture distante, dans lequel le gain de réception de liaison montante au niveau porteuse de l'unité de couverture distante est inférieur à 0.

7. Procédé selon la revendication 6, dans lequel l'ajustement, par le dispositif d'ajustement de gain, d'un gain de réception de liaison montante au niveau porteuse de l'unité de couverture distante conformément au facteur de pondération au niveau porteuse de l'unité de couverture distante comprend :

l'envoi, par le dispositif d'ajustement de gain, d'un message d'instruction d'ajustement de gain à l'unité de couverture distante, dans lequel le message d'instruction d'ajustement de gain porte le facteur de pondération au niveau porteuse de l'unité de couverture distante, de manière à instruire l'unité de couverture distante d'ajuster, conformément au facteur de pondération au niveau porteuse, le gain de réception de liaison montante au niveau porteuse.

8. Procédé selon la revendication 6, dans lequel l'ajustement, par le dispositif d'ajustement de gain, d'un gain de réception de liaison montante au niveau porteuse de l'unité de couverture distante conformément au facteur de pondération au niveau porteuse de l'unité de couverture distante comprend :

l'ajustement, par le dispositif d'ajustement de gain, du gain de réception de liaison montante au niveau porteuse de l'unité de couverture distante à $10\lg(N)dB$, dans lequel $N$ est le facteur de pondération au niveau porteuse de l'unité de couverture distante, et $0 < N < 1$.

FIG. 1

A gain adjustment device acquires carrier-level uplink user power of a remote coverage unit in a co-cell and carrier-level uplink user power of the rest of remote coverage units in the co-cell 101

The gain adjustment device determines a carrier-level weighting factor of the remote coverage unit according to the carrier-level uplink user power of the remote coverage unit and the carrier-level uplink user power of the rest of remote coverage units in the co-cell 102

The gain adjustment device adjusts a carrier-level uplink receive gain of the remote coverage unit according to the carrier-level weighting factor of the remote coverage unit, where the carrier-level uplink receive gain of the remote coverage unit is less than 0 103

FIG. 2

A gain adjustment device detects carrier-level total uplink power and carrier-level noise power of a first remote coverage unit in a co-cell ⟋ 201

The gain adjustment device detects carrier-level total uplink power and carrier-level noise power of a second remote coverage unit in the co-cell ⟋ 202

The gain adjustment device determines carrier-level uplink user power of the first remote coverage unit according to the carrier-level total uplink power and the carrier-level noise power of the first remote coverage unit ⟋ 203

The gain adjustment device determines carrier-level uplink user power of the second remote coverage unit according to the carrier-level total uplink power and the carrier-level noise power of the second remote coverage unit ⟋ 204

The gain adjustment device adds up the carrier-level uplink user power of the first remote coverage unit and the carrier-level uplink user power of second remote coverage unit, to obtain carrier-level total uplink user power in the co-cell ⟋ 205

The gain adjustment device determines a carrier-level weighting factor of the first remote coverage unit according to a ratio of the carrier-level uplink user power of the first remote coverage unit to the carrier-level total uplink user power in the co-cell ⟋ 206

The gain adjustment device adjusts, according to the carrier-level weighting factor of the first remote coverage unit, a gain of a carrier-level uplink receiving signal that is sent by the first remote coverage unit to 10lg (N) dB, where N is the carrier-level weighting factor of the first remote coverage unit ⟋ 207

FIG. 3

EP 3 079 415 B1

A remote coverage unit in a co-cell reports carrier-level uplink
user power of the remote coverage unit to a gain adjustment
device, so that the gain adjustment device determines a carrier-
level weighting factor of the remote coverage unit according to
the carrier-level uplink user power of the remote coverage unit
and carrier-level uplink user power of the rest of remote coverage
units in the co-cell

301

The remote coverage unit receives the carrier-level weighting
factor of the remote coverage unit sent by the gain adjustment
device

302

The remote coverage unit adjusts a carrier-level uplink receive
gain of the remote coverage unit according to the carrier-level
weighting factor, where the carrier-level uplink receive gain of
the remote coverage unit is less than 0

303

FIG. 4

41
Acquiring
module

42
Determining
module

43
Gain adjustment
module

FIG. 5

51
Power reporting
module

52
Receiving
module

53
Gain adjustment
module

Gain adjustment device

50

FIG. 6

23

600

Processor — 61

Memory — 62      Transceiver — 63

FIG. 7

700

Memory — 72      Processor — 71

Transmitter — 73      Receiver — 74

FIG. 8

81      82

Gain adjustment device      Remote coverage unit

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080198995 A1

- US 20040106387 A1